# EUROPEAN PATENT SPECIFICATION

(11) **EP 0 890 305 B1**
(45) Date of publication and mention of the grant of the patent: **02.04.2003**
(21) Application number: 98201951.5
(22) Date of filing: 11.06.1998
(51) Int. Cl.: A01K 11/00

(54) **Identification label for animals**
Identifikationsetikett für Tiere
Etiquette d'identification pour animaux

(30) Priority: 30.06.1997 BE 9700560
(43) Date of publication of application: 13.01.1999
(73) Proprietor: Splitthoff, Josef, D-46419 Isselburg (DE); Tansens, Laurette, B-9800 Deinze (BE)
(72) Inventor: Splitthoff, Josef, D-46419 Isselburg (DE); Tansens, Laurette, B-9800 Deinze (BE)
(74) Representative: Leherte, Georges M.L.M., Dr.

(56) References cited:
- EP-A- 0 177 201
- WO-A-91/10982
- US-A- 4 953 313

## Description

The invention relates to an identification label for animals provided with a male and a female part of a flexible synthetic material, which male part is provided with a pin, which ends in a cross-sectionally projecting head, conically tapering towards the extremity and which female part is provided with a housing for receiving the head of the pin therein, via a bore with a section, which is smaller than the cross-section of the protruding part of the head.

Such an identification label is in itself known for example from the published Belgian patent application BE 91 00208 and is used as an earmark for animals, such as for example cattle in order to facilitate their identification - for example for verifying the origin of an animal or for following up the milk production of each cow individually. The earmark is moreover provided with a number or with a transponder(chip).

The male part is provided with a plate-shaped part, which is mostly made out of a supple synthetic material among others to prevent the animals from hurting themselves or other animals and in order to prevent the earmark from breaking. With the known identification label the tapered extending head on the protruding part connects to the pin via a wide upright edge essentially transverse to the longitudinal direction of the pin. The pin is preferably made hollow.

The female part also comprises a plate-shaped part mostly made out of a supple synthetic material, which is provided with a housing working together with the head. The space enclosed by the housing is accessible to the head via a bore through the plate-shaped part of this female part. The neck of the bore has a structure, which is complementary to the shape of the edge of the head. The bore can moreover saltatorially increase in diameter in the direction of the top of the housing and correspondingly thereto also the pin, so that a double closure is obtained, as known from the aforementioned Belgian patent BE 9100208.

The identification label is installed by means of pincers provided especially for that purpose, whereby a metal pressure pin is placed in the hollow space of the pin of the male part and the head of the pin is driven through the ear of the animal and the bore of the housing. Because the housing is made of flexible synthetic material, the bore will widen in order to allow the head to pass and thereafter take on its original form. The protruding edge of the head then runs up against the edge of the bore, through which the head is prevented from coming loose out of the housing. Hence a closure is obtained which prevents the accidental coming apart of the male and the female part.

In order to prevent fraud it is in itself known to mount in the housing of the female part a ring or collar of a hard synthetic material. This occurs after the production of the identification label. It is a discontinuous ring, which through its spring force springs open in the hollow after it is driven through the narrower neck of the bore. However, because of the fact that the ring only covers the upright edge of the housing and leaves the top of the housing free, a small hole can be made in this top, the earmark heated in order to make the synthetic material soft and pressure applied against the head with a small object via the aforementioned hole in order to press it out of the housing via the neck. After the earmark has again been attached (to another animal) the aforementioned hole is closed by locally melting the synthetic material.

The object of this invention is to prevent in as far as possible the manner of perpetrating fraud referred to above and to make visible the attempts undertaken for that purpose.

An identification label of the type mentioned in the introduction according to the invention, whereby an axially split discontinuous ring is introduced into the housing, which lies axially in the extension of the bore, for that purpose shows the characteristic, that the ring is part of a cylindrical inner casing of the housing, which on the side turned away from the bore of the housing is essentially closed off transverse to the axial direction by a head surface, whereby the material of the inner casing, at least in the temperature range up to melting point is harder than the material of the male and female parts.

With application of the measure according to the invention the dome-shaped inner casing hermetically closes off all sides of the housing - with exception of the bore. With that the fraud durability in relation to the state-of-the-art is greatly increased. Because the inner casing is furthermore made out of a material, which is still hard at the melting temperature of the label it will not be possible to perpetrate fraud unnoticed or disguise attempts undertaken for that purpose. Heating to above the melting temperature of the earmark would indeed be necessary in order to make the inner casing soft so that it can be drilled through. The earmark would through this remain deformed, so that the fraud remains visible.

The label itself is preferably made of polyurethane with a melting temperature of 210° C to 220° C. In fact the melting temperature of the ring needs to be higher than the melting or softening temperature of the material out of which the male part is made. The softening temperature is to be understood as the temperature at which the hardness (penetrability) of the material decreases.

The placing of the label is hardly influenced by this measure, because the inner casing is open at the mouth of the bore and can consequently expand.

Such an identification label according to the invention preferably shows the characteristic, that the inner casing is divided over an axial section into first and second semicylindrical casing halves.

By dividing the inner casing into two halves the insertion of the head of the pin is further improved.

A further preferred embodiment shows the characteristic, that the first and second casing halves are provided with guiding means for guiding both the halves when nearing and parting from each other.

With application of this measure it is achieved, that with the parting from each other of both the casing halves when inserting the head, and the returning towards each other after the head of the pin is positioned, the two halves again return to the original position and completely fit against each other. Through that it is precluded, that an opening can develop there, through which a pin can be pushed in order to dislodge the head.

The guiding means are preferably mounted near to the head surface of the inner casing and comprise first and second ribs, which are respectively mounted on the section of the first and second casing halves and which work together with first and second grooves, which are provided in the section of the second and first casing halves, which first and second ribs in a condition of rest, whereby the first and second casing halves touch each other over the section, fall into the first and second grooves.

Because of the fact that the inner casing is made out of two parts while those parts are only held together at the back by the housing, that is, on the top of the housing, the ring can open in front in order to allow the pin therein and nevertheless remain shut at the back in order to prevent fraud. Were the (rib/groove) connection implemented in front, that is on the side of the bore, then the ring would often remain open in front (after the insertion of the pin) because it would not have closed correctly (protrusion not having arrived in groove). This is now prevented.

Another preferred embodiment of an identification label according to the invention shows the characteristic, that the inner casing on the side of the bore is provided with a locking edge for locking the head of the pin.

With application of this measure the dislodging of the head of the pin out of the housing is further impeded.

The locking edge preferably tapers in section and this corresponds to the angle, which the protruding part of the head forms with the axis of the pin, so that a retaining fit of the head of the pin is obtained in the inner casing of the housing, which not only very much impedes the dislodging, but furthermore with heating results in cutting and breaking-off of the pin. Through that the pin becomes unusable. Such a retaining fit in an embodiment with a double or triple closure can be implemented just as many times, as shown in an embodiment of the housing without inner casing in the aforementioned Belgian patent BE 91 00208.

A further fraud prevention measure is that the inner casing is injected into the housing and therefore connects perfectly to the locking edge. The head can then very much more difficultly be removed from the female part than in the case where the ring after production of the label is inserted via the bore.

By now mounting the transponder chip onto the male part, the damage through fraud will still further increase, because just by loosening the label (in order to perpetrate fraud) the male part is indeed very often more damaged than the female part. In some cases the female part is reusable and the male part not. This contrary to the known ear labels, whereby the transponder is placed on the female part and the chip can also be used again (by providing another male part).

By making the ring out of fibreglass a higher impact-resistance is obtained and with that the fraud susceptibility is further increased.

The invention will by way of example be explained on the basis of the drawings shown in the figures. Therein mutually corresponding elements are provided with the same reference indications.

Therein:
figure 1 shows an identification label for animals provided with a male and a female part according to the invention;
figure 2 shows a cross-section of the pin and the housing with the inner casing of the identification label from figure 1;
figure 3 shows a casing half of an inner casing in front, top, bottom and side view for utilisation in the identification label from figure 1.

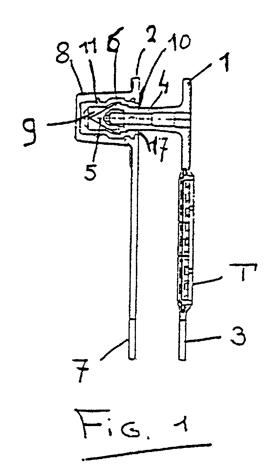

Figure 1 shows an identification label for animals provided with a male (1) and a female (2) part of flexible synthetic material. The male part (1) is provided with a plate-shaped part (3) and a pin (4) extending perpendicular thereto. The plate-shaped part (3) is provided with a transponder device or chip, in which the identification information is stored. The pin (4) has an essentially cylindrical neck and ends in a cross-sectionally projecting head, conically tapering towards the extremity (5). The diameter of the head (5) increases stepwise over the protruding part (6) to a certain maximum diameter. In order to make possible the installation of the label on the ear of an animal by means of pincers designed especially for that purpose, which are provided with a pressure pin, the pin (4) is made hollow. The pressure pin of the pincers (not shown) is moreover slid into the pin (4).

The female part (2) is also provided with a plate-shaped part (7). Perpendicular thereto a housing (8) is mounted, which encloses a hollow space (9), into which a dome-shaped inner casing (11) is introduced for the introduction thereinto of the head (5), via a bore (17). The bore (17) has a diameter, which on the one hand is greater than that of the neck (10) of the pin (4) and which on the other hand is smaller than the diameter at the protruding part (6) of the head (5) of the pin (4).

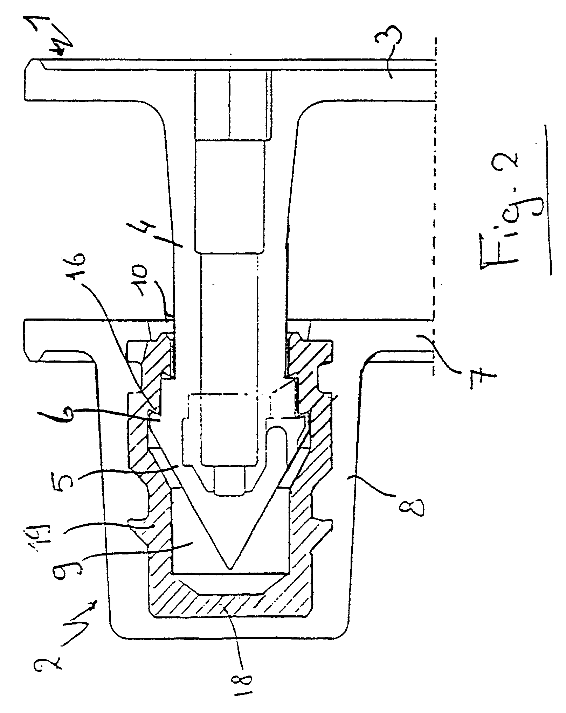

Figure 2 shows in more detail the structural working together of the head (5) with the inner casing (11) and the housing (8). The inner casing (11) is shown shaded herein and is made of a material with a melting or softening temperature that is substantially higher than that of the other material of the label. The inner casing (11) shows on the side of the bore a diameter which increases gradually in accordance with the protruding part (6) of the head (5). The inner casing (11) is moreover provided with at least one sharp locking edge (16), which tapers in section and therein corresponds to the angle, which the protruding part of the head (5) forms with the axis of the pin (4). Because of this an outwardly directed tractive force exerted on the pin (4) will result in a contraction of the mouth of the inner casing, through which the inner casing (11) will clamp the head (5) more tightly and thus effect and extra locking. In case of an excessive tractive force, the head will not come loose out of the inner casing without damage and as a result of which will be unusable.

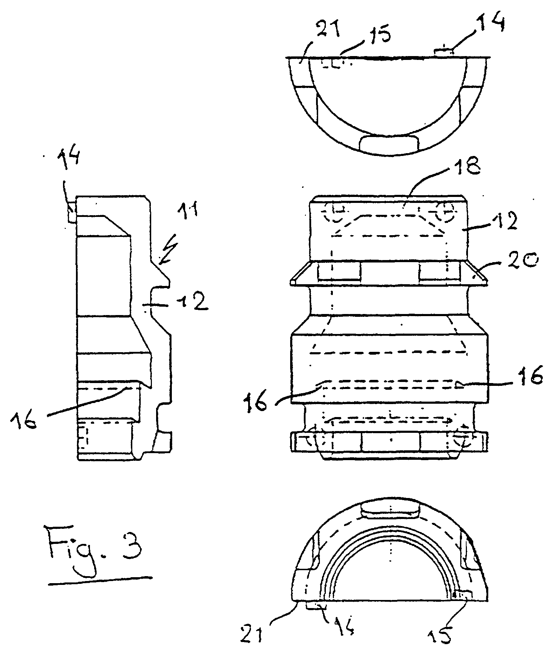

The inner casing (11) consists of a head surface (18) and a cylindrical casing or ring (19) and can be provided with an axial split, which transects both the ring (19) and the head surface (18). It can moreover be selected to interrupt the ring in one or two places. An embodiment, whereby a full transection of the inner casing (11) into two equal casing halves (12) and (13) is selected - hereinafter called first and second casing halves (12) and (13) - is shown in figure 3.

Figure 3 shows the first casing half (12) of such an inner casing (11) in front, top, bottom and side view for utilisation in the identification label from figure 1. The first casing half (12) is provided on the outside with protrusions (20) for locking the inner casing (11) in the housing (8). On a section (21) the casing half (11) is provided with two first protruding ribs (14) placed diagonally opposite each other and with two grooves (15) placed diagonally opposite each other. The two ribs (14) work together with two second grooves (15') placed diagonally opposite each other on the section (21) of the not shown second casing half (13), while the two grooves (15) work together with two second protruding ribs (14') placed diagonally opposite each other on the section (21) of the not shown second casing half (13).
The ribs and grooves mutually working together work as guiding means for guiding both the halves when nearing and parting from each other, through which both halves in the condition of rest, whereby the head is positioned in the housing always lie hermetically close against each other.

This embodiment of the inner casing is also provided with a sharp locking edge (16).

The inner casing is preferably introduced into the housing (8) by injection during the production process.

The invention idea is not restricted to the embodiments shown and discussed for this purpose. Thus it is quite possible to apply the invention with a metal or fibreglass inner casing (11) consisting of two halves or with more steps in the diameter increase of the head (5) on the protruding part (6).

## Claims

1. Identification label for animals provided with a male (1) and a female part (2) of a flexible synthetic material, which male part is provided with a pin (4), which ends in a cross-sectionally projecting head (5), conically tapering towards the extremity and which female part (2) is provided with a housing (8) for receiving the head (5) therein, via a bore (17) with a section, which is smaller than the cross-section of the protruding part of the head (5), in which housing an axially split discontinuous ring (19) is introduced, which lies axially in the extension of the bore, **characterised in that** the ring (19) is part of a dome-shaped inner casing (11) of the housing, which on the side turned away firom the bore of the housing is essentially closed off, in a direction transverse to the axial direction, by a head surface (18), and which is axially divided into first (12) and second semi cylindrical casing halves (13), and that the material of the inner casing (11), at least in the temperature range up to melting point is harder than the material of the male (1) and female parts (2).

2. Identification label according to claim 1, **characterised in that** the inner casing (11) is made out of a synthetic material, which when heated to at least the softening temperature of the material of the female part (2), remains harder than the material of the female part (2).

3. Identification label according to claim 1 or 2, **characterised in that** the first (12) and second casing halves (13) are provided with guiding means (14, 15) for guiding both the halves when nearing and parting from each other.

4. Identification label according to claim 3, **characterised in that** the guiding means (14, 15) are mounted near to the head surface (18) of the inner casing (11) and comprise first and second ribs (14), which are respectively mounted on the section of the first (12) and second casing halves (13) and which work together with first and second grooves (15), which are respectively provided in the section of the second (13) and first casing halves (12), which first and second ribs (14) in a condition of rest, whereby the first (12) and second casing halves (13) touch each other over the section, fall into the first and second grooves (15).

5. Identification label according to one of the preceding claims, **characterised in that** the material of the inner casing (11) has a melting temperature of at least 220° C.

6. Identification label according to one of the preceding claims, **characterised in that** the inner casing (11) is made of a metal.

7. Identification label according to one of the preceding claims, **characterised in that** the inner casing (11) is made of fibreglass.

8. Identification label according to one of the preceding claims, **characterised in that** the inner casing (11) on the side of the bore is provided with a locking edge (16) for locking the head of the pin (4).

9. Identification label according to claim 8, **characterised in that** the locking edge (16) tapers in section and therein corresponds to the angle, which the protruding part (6) of the head (5) forms with the axis of the pin (4).

10. Identification label according to one of the preceding claims, **characterised in that** the inner casing (11) is inserted into the housing (8) by injection.

11. Identification label according to one of the preceding claims, **characterised in that** the inner casing (11) gradually increases in diameter in a direction away from the bore (17) and that the protruding part (6) of the head of the pin (4) corresponds thereto.

12. Identification label according to one of the preceding claims, **characterised by** a micro-transmitter, which is mounted on the male part (1)

## Patentansprüche

1. Identifikationsetikett für Tiere, versehen mit einem einzuführenden Teil (1) und einem aufnehmenden Teil (2) aus einem flexiblen synthetischen Material, wobei der einzuführende Teil mit einem Stift (4) versehen ist, der in einem mit seinem Querschnitt hervorstehenden Kopf (5) endet, welcher sich konisch zum äußeren Ende hin verjüngt, und wobei das aufnehmende Teil (2) mit einem Gehäuse (8) versehen ist für die Aufnahme des Kopfes (5) über die Bohrung (17) mit einem Bereich, der kleiner ist als der Querschnitt des hervorstehenden Teils des Kopfes (5), wobei in das Gehäuse ein axial gespaltener, diskontinuierlicher Ring (19) eingeführt ist, welcher axial in der Ausdehnung der Bohrung liegt, **dadurch gekennzeichnet, dass** der Ring (19) Teil einer kuppelförmigen Innenhülse (11) des Gehäuses ist, welche auf der der Bohrung abgewandten Seite des Gehäuses durch eine Kopffläche (18) in einer zur axialen Richtung transversalen Richtung im wesentlichen geschlossen ist, und welche axial in eine erste (12) und eine zweite semizylindrische Hülsenhälfte (13) geteilt ist, und dass das Material der Innenhülse (11), wenigstens im Temperaturbereich bis zum Schmelzpunkt, härter ist als das Material des einzuführenden Teils (1) und des aufnehmenden Teils (2).

2. Identifikationsetikett nach Anspruch 1, **dadurch gekennzeichnet, dass** die Innenhülse (11) aus einem synthetischen Material hergestellt ist, das, wenn es wenigstens auf die Erweichungstemperatur des Materials des aufnehmenden Teils (2) erhitzt wird, härter bleibt als das Material des aufnehmenden Teils (2).

3. Identifikationsetikett nach Anspruch 1 oder 2, **dadurch gekennzeichnet, dass** die erste (12) und die zweite Hülsenhälfte (13) mit Führungsvorrichtungen (14, 15) für die Führung beider Hälften, wenn sich diese einander nähern oder voneinander entfernen, versehen sind.

4. Identifikationsetikett nach Anspruch 3, **dadurch gekennzeichnet, dass** die Führungsvorrichtungen (14, 15) in der Nähe der Kopffläche (18) der Innenhülse (11) angebracht sind und erste und zweite Rippen (14) umfassen, die an dem Bereich der ersten (12) bzw. der zweiten Hülsenhälfte (13) angebracht sind und die mit ersten und zweiten Nuten (15) zusammenwirken, welche in dem Bereich der zweiten (13) bzw. der ersten Hülsenhälfte (12) vorgesehen sind, wobei die ersten und die zweiten Rippen (14), im Ruhezustand, in welchem die erste (12) und die zweite Hülsenhälfte (13) einander in dem besagten Bereich berühren, in die ersten und die zweiten Nuten (15) einfallen.

5. Identifikationsetikett nach einem der vorhergehenden Ansprüche, **dadurch gekennzeichnet, dass** das Material der Innenhülse (11) eine Schmelztemperatur von wenigstens 220°C aufweist.

6. Identifikationsetikett nach einem der vorhergehenden Ansprüche, **dadurch gekennzeichnet, dass** die Innenhülse (11) aus Metall besteht.

7. Identifikationsetikett nach einem der vorhergehenden Ansprüche, **dadurch gekennzeichnet, dass** die Innenhülse (11) aus Glasfaser besteht.

8. Identifikationsetikett nach einem der vorhergehenden Ansprüche, **dadurch gekennzeichnet, dass** die Innenhülse (11) auf der Seite der Bohrung mit einer Arretierungskante (16) zum Arretieren des Kopfes des Stiftes (4) versehen ist.

9. Identifikationsetikett nach Anspruch 8, **dadurch gekennzeichnet, dass** die Arretierungskante (16) im Schnitt konisch zuläuft und dabei dem Winkel entspricht, welcher von dem hervorstehenden Teil (6) des Kopfes (5) und der Achse des Stiftes (4) gebildet wird.

10. Identifikationsetikett nach einem der vorhergehenden Ansprüche, **dadurch gekennzeichnet, dass** die Innenhülse (11) in das Gehäuse (8) durch Einspritzen eingebracht wird.

11. Identifikationsetikett nach einem der vorhergehenden Ansprüche, **dadurch gekennzeichnet, dass** die Innenhülse (11) in einer Richtung von der Bohrung (17) weg in ihrem Durchmesser schrittweise zunimmt und dass der vorstehende Teil (6) des Kopfes des Stiftes (4) diesem Durchmesser entspricht.

12. Identifikationsetikett nach einem der vorhergehenden Ansprüche, **gekennzeichnet durch** einen Mikrosender, der auf dem einzuführenden Teil (1) montiert ist.

## Revendications

1. Etiquette d'identification pour animaux présentant une partie mâle (1) et une partie femelle (2) en matière synthétique flexible, ladite partie mâle étant pourvue d'une broche (4), dont l'extrémité est une tête saillante en section transversale (5), avec un effilage conique en direction de l'extrémité, et dont la partie femelle (2) est pourvue d'un logement (8) destiné à recevoir la tête (5), via un alésage (17) comportant une section qui est plus petite que la section transversale de la partie saillante de la tête (5), logement dans lequel est introduite une bague discontinue fendue axialement (19), qui est située axialement dans le prolongement de l'alésage, **caractérisée en ce que** la bague (19) fait partie d'une chambre intérieure en forme de dôme (11) du logement, dont le côté opposé à l'alésage du logement est essentiellement fermé dans une direction transversale à la direction axiale, par une surface de tête (18), et qui est axialement divisée en une première (12) et une deuxième (13) moitiés de chambre semi-cylindriques, et **en ce que** la matière de la chambre intérieure (11), au moins dans la gamme de température allant jusqu'au point de fusion, est plus dure que la matière des parties mâle (1) et femelle (2).

2. Etiquette d'identification suivant la revendication 1, **caractérisée en ce que** la chambre intérieure (11) est constituée d'une matière synthétique, qui lorsqu'elle est chauffée à au moins la température de ramollissement de la matière de la partie femelle (2), reste plus dure que la matière de la partie femelle (2).

3. Etiquette d'identification suivant la revendication 1 ou 2, **caractérisée en ce que** les première (12) et deuxième (13) moitiés de chambre sont pourvues de moyens de guidage (14, 15) pour guider les deux moitiés lorsqu'elles se rapprochent et s'écartent l'une de l'autre.

4. Etiquette d'identification suivant la revendication 3, **caractérisée en ce que** les moyens de guidage (14, 15) sont montés à proximité de la surface de tête (18) de la chambre intérieure (11) et comprennent des première et deuxième nervures (14), qui sont respectivement montées sur la section des première (12) et deuxième (13) moitiés de chambre et qui agissent de concert avec des première et deuxième rainures (15), qui sont respectivement prévues dans la section des deuxième (13) et première (12) moitiés de chambre, lesdites première et deuxième nervures (14), dans une situation de repos dans laquelle la section des première (12) et deuxième (13) moitiés de chambre se touchent, s'insèrent dans les première et deuxième nervures (15).

5. Etiquette d'identification suivant l'une quelconque des revendications précédentes, **caractérisée en ce que** la matière de la chambre intérieure (11) a une température de fusion d'au moins 220°C.

6. Etiquette d'identification suivant l'une quelconque des revendications précédentes, **caractérisée en ce que** la chambre intérieure (11) est constituée de métal.

7. Etiquette d'identification suivant l'une quelconque des revendications précédentes, **caractérisée en ce que** la chambre intérieure (11) est constituée de fibre de verre.

8. Etiquette d'identification suivant l'une quelconque des revendications précédentes, **caractérisée en ce que** la chambre intérieure (11) du côté de l'alésage est pourvue d'un bord de verrouillage (16) servant à verrouiller la tête de la broche (4).

9. Etiquette d'identification suivant la revendication 8, **caractérisée en ce que** le bord de verrouillage (16) a une section effilée correspondant à l'angle que la partie saillante (6) de la tête (5) forme avec l'axe de la broche (4).

10. Etiquette d'identification suivant l'une quelconque des revendications précédentes, **caractérisée en ce que** la chambre intérieure (11) est insérée dans le logement (8) par injection.

11. Etiquette d'identification suivant l'une quelconque des revendications précédentes, **caractérisée en ce que** le diamètre de la chambre intérieure (11) augmente graduellement dans une direction s'écartant de l'alésage (17), et **en ce que** la partie saillante (6) de la tête de la broche (4) correspond à celui-ci.

12. Etiquette d'identification suivant l'une quelconque des revendications précédentes, **caractérisée par** un micro-transmetteur qui est monté sur la partie mâle (1).
